# EUROPÄISCHE PATENTANMELDUNG

(11) **EP 1 443 223 A1**
(43) Veröffentlichungstag der Anmeldung: **04.08.2004**
(21) Anmeldenummer: 03013127.0
(22) Anmeldetag: 10.06.2003
(51) Int. Cl.: F16B 9/02

(54) **Schnappmechanismus**

(30) Priorität: 29.01.2003 DE 20301353 U
(71) Anmelder: LIEBHERR-HAUSGERÄTE GMBH, 88416 Ochsenhausen (DE)
(72) Erfinder: Döbler, Roland, 88471 Laupheim (DE); Fischer, Martin, 73431 Aalen (DE)
(74) Vertreter: Laufhütte, Dieter, Dr.-Ing.

(57) **Zusammenfassung**

Die vorliegende Erfindung betrifft einen Schnappmechanismus zur Halterung eines länglichen Gegenstandes (1) an einem Basiselement (2), wobei der Schnappmechanismus mindestens einen elastisch auslenkbaren Rasthaken (3) umfasst. Erfindungsgemäß zeichnet sich der Schnappmechanismus dadurch aus, dass der Rasthaken (3) schräg zur Längsrichtung des eingerasteten länglichen Gegenstandes (1) ausgerichtet ist.

## Beschreibung

Die Erfindung betrifft einen Schnappmechanismus zur Halterung von länglichen Gegenständen, insbesondere von Rohren, Drähten, Kabeln und Profilstäben, bei dem der längliche Gegenstand durch einen elastisch auslenkbaren Rasthaken gehaltert wird.

Vorbekannt sind unter anderem Schnappmechanismen zur Halterung von Rohren. Bei den vorbekannten Schnappmechanismen sind die Rasthaken senkrecht zur Längsrichtung des Rohres ausgerichtet, so daß sie in einer zur Rohrlängsrichtung parallelen Ebene liegen. Dies hat zur Folge, daß die vorbekannten Rasthaken zur Einführung des Rohres relativ stark verformt werden müssen. Dies erfordert eine relative weiche Ausführung des Rasthakens, was eine geringere Haltekraft nach sich zieht. Andere vorbekannte Halterungen arbeiten mit Hilfsklammern, die als Zusatzteile zusätzliche Material- und Montagekosten mit sich bringen. Weiterhin vorbekannt ist die Befestigung eines Rohres durch eine Klebeverbindung. Allerdings ist der dafür notwendige Heißkleber sehr kostenintensiv.

Es ist daher Aufgabe der vorliegenden Erfindung einen verbesserten Schnappmechanismus zur Halterung von länglichen Gegenständen vorzuschlagen. Insbesondere soll der erfindungsgemäße Schnappmechanismus eine hohe Haltekraft und eine geringe Montagekraft aufweisen. Weiterhin soll der Schnappmechanismus kostengünstig und ohne Zusatzteile herstellbar sein.

Erfindungsgemäß wird die Aufgabe durch einen Schnappmechanismus mit den Merkmalen des Schutzanspruchs 1 gelöst. Bei dem erfindungsgemäßen Schnappmechanismus ist der Rasthaken in nicht ausgelenkter Stellung (Grundstellung) schräg zur Längsrichtung des länglichen Gegenstandes ausgerichtet. Zur Öffnung des Schnappmechanismus und Einführung des länglichen Gegenstandes in die Halterung wird der Rasthaken aus der Grundstellung ausgelenkt. Ist der längliche Gegenstand vollständig eingeführt, so schnappt der Rasthaken auf Grund seiner Elastizität zurück. Der Rasthaken liegt dann bei eingerastetem, d.h. befestigtem, länglichen Gegenstand nicht senkrecht zur Längsrichtung des länglichen Gegenstandes, sondern kommt diagonal auf diesem zu liegen.

Bevorzugt ist der Rasthaken so ausgestaltet, daß die elastische Auslenkung in Form einer Schwenkung um eine zur Einführrichtung des länglichen Gegenstandes im Wesentlichen parallele Achse erfolgt. Zum Öffnen des Schnappmechanismus wird der Rasthaken durch diese Schwenkung an eine Parallele zur Längsrichtung des länglichen Gegenstandes angenähert. Auf Grund dieser Ausgestaltung muß der Rasthaken zum Einführen des zu befestigenden Gegenstandes nur um einen vergleichsweise kleinen Winkelbetrag aufgebogen werden. Die kombinierte Biege- und Torsionsbelastung erfordert eine geringere Verformung des Hakenmaterials als bei vorbekannten Rasthaken. Die insgesamt geringere Verformung verringert die zur Montage erforderliche Kraft, was wiederum eine steifere Ausgestaltung des Hakenmaterials erlaubt. Das steifere Material gewährleistet eine höhere Haltekraft. Damit erzielt die erfindungsgemäße Anordnung eine Verbesserung des Verhältnisses von Haltekraft und Montagekraft.

Vorteilhafterweise ist der Rasthaken aus einem elastischen Kunststoff, beispielsweise Polypropylen oder Thermoplast, hergestellt. Vorteilhaft ist es ebenso, wenn der Rasthaken direkt an das aus dem gleichen Material, insbesondere aus dem gleichen Kunststoff, hergestellte Basiselement angeformt ist.

In einer bevorzugten Ausgestaltung weist der Rasthaken an seiner Außenseite, d.h. an der Seite, die mit dem zu befestigenden länglichen Gegenstand beim Einführen in Kontakt kommt, eine Einführschräge auf. Vorzugsweise ist die Einführschräge als Gleitfläche für den einzuführenden Gegenstand ausgestaltet. Die Einführschräge sorgt in Verbindung mit der schrägen Ausrichtung des Rasthakens dafür, daß der Rasthaken beim Eindrücken des zu befestigenden Gegenstandes aufgebogen wird, so daß der zu befestigende Gegenstand unter den Rasthaken gelangen kann. Ist der längliche Gegenstand vollständig eingedrückt, schnappt der Rasthaken zurück und der längliche Gegenstand rastet ein. Diese Ausgestaltung erlaubt eine sehr einfache Montage des länglichen Gegenstandes in einem Arbeitsgang. Dieser Arbeitsgang hat nur eine Bewegungsrichtung und es sind keine zusätzlichen Hilfsbewegungen erforderlich.

Vorteilhafterweise ist der Rasthaken an seiner Innenseite so geformt, daß der zu befestigende längliche Gegenstand formschlüssig eingefaßt wird und so besonders fest bzw. ohne Spiel sitzt.

In einer weiter vorteilhaften Ausgestaltung weist der erfindungsgemäße Schnappmechanismus zusätzlich eine Stützrippe auf, die den zu befestigenden, länglichen Gegenstand beim Eindrücken in den Schnappmechanismus führt. Zweckmäßigerweise ist die Stützrippe auf der dem Rasthaken gegenüberliegenden Seite des länglichen Gegenstandes angeordnet. Vorteilhaft ist eine bezogen auf die Längsrichtung des zu befestigenden Gegenstandes leicht versetzte Positionierung. Die Stützrippe bildet ein Widerlager für das Aufschwenken bzw. Aufbiegen des Rasthakens beim Eindrücken des zu befestigenden Gegenstandes.

Es ist wiederum vorteilhaft, die Stützrippe aus Kunststoff herzustellen und direkt an das Basiselement anzuformen. In einer vorteilhaften Ausgestaltung ist auch an der Stützrippe eine Einführschräge mit Gleitfläche vorgesehen. Dadurch wird das Eindrücken des zu befestigenden, länglichen Gegenstandes zusätzlich erleichtert. Vorteilhafterweise kann der Bereich der Stützrippe, in dem der zu befestigende Gegenstand in seiner Endstellung zu liegen kommt, so geformt werden, daß der Befestigungsgegenstand formschlüssig auflagert.

Besonders vorteilhaft ist es, wenn Basiselement, Rasthaken und Stützrippe aus einem Kunststoffgießteil mit einer Kunststoffgießform gefertigt sind. Auf diese Weise läßt sich der Schnappmechanismus besonders kostengünstig herstellen, weil keinerlei Zusatzteile oder zusätzliche Arbeitsgänge erforderlich sind.

Ein Ausführungsbeispiel der Erfindung wird anhand der nachstehenden Figuren im einzelnen erläutert. Dabei zeigt:
- Fig. 1: eine Draufsicht auf den erfindungsgemäßen Schnappmechanismus,
- Fig. 2: eine Schrägansicht des Schnappmechanismus mit nach vorne zeigendem Rasthaken,
- Fig. 3: eine Schrägansicht des Schnappmechanismus mit nach hinten zeigendem Rasthaken.

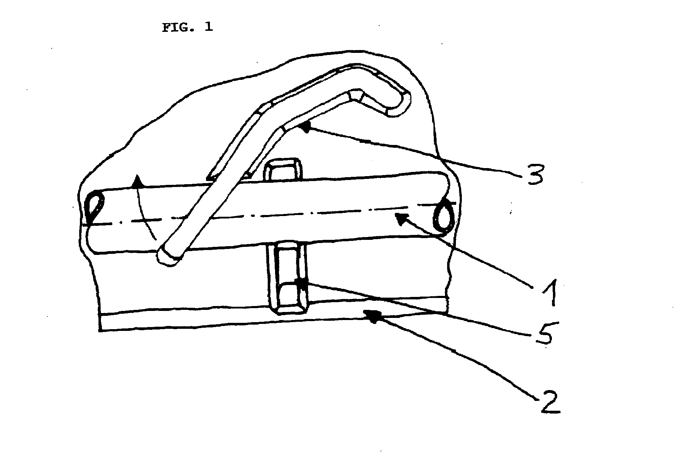

Figur 1 zeigt den erfindungsgemäßen Schnappmechanismus von oben. In dem Schnappmechanismus ist der längliche Gegenstand 1, hier ein Rohr, gehaltert. Der Rasthaken 3 ist nicht parallel zum Querschnitt des Rohres ausgerichtet, sondern greift schräg über das Rohr. Dem Rasthaken gegenüber ist die Stützrippe 5 angeordnet. Das eingerastete Rohr 1 lagert auf dem Innenabschnitt 52 der Stützrippe 5 auf und wird an seiner Oberseite von der Innenseite 32 des Rasthakens 3 eingefaßt.

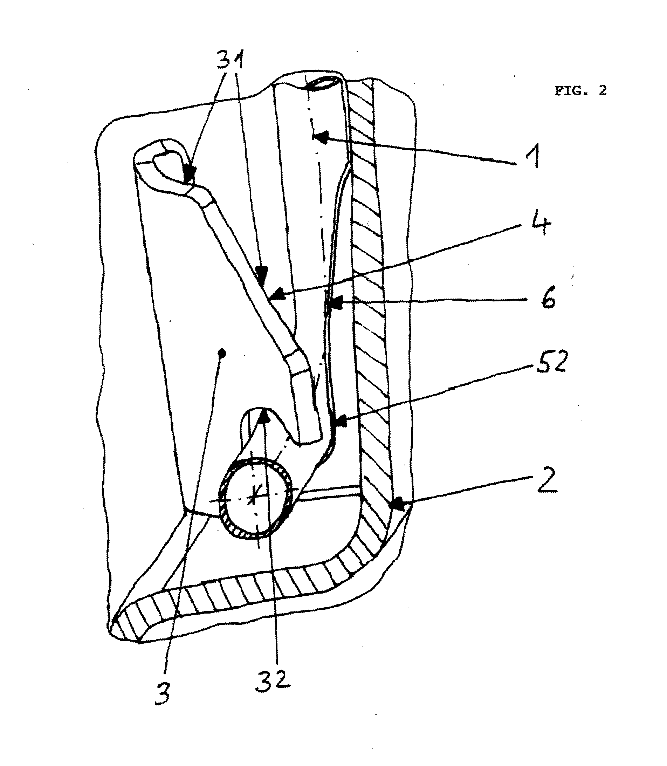

Figur 2 zeigt eine Seitenansicht des erfindungsgemäßen Schnappmechanismus mit nach vorne ausgerichtetem Rasthaken 3. In den Schnappmechanismus ist das Rohr 1 eingerastet. An der Außenseite 31 des Rasthakens 3 und am Außenabschnitt 51 der Stützrippe 5 sind Einführschrägen 4 und 6 mit Gleitflächen angeordnet. Die beiden Einführschrägen 4 und 6 bilden eine nach oben geöffnete, V-förmige Kerbe, in die das Rohr zur Befestigung eingedrückt wird. Wird das Rohr von oben in den in gezeigten Schnappmechanismus eingedrückt, so wird der Rasthaken nach links gebogen, so daß das Rohr nach unten gelangen kann. Erreicht das Rohr die Auflagerung im unteren Abschnitt der Stützrippe, so schnappt der Rasthaken 3 zurück, und das Rohr 1 sitzt fest in der Halterung, so wie in Figur 2 gezeigt.

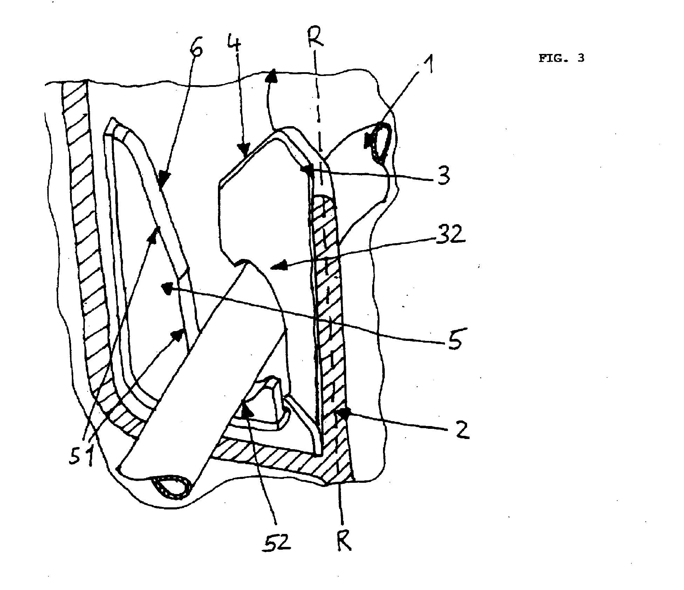

Figur 3 zeigt eine Schrägansicht des erfindungsgemäßen Schnappmechanismus mit nach hinten zeigendem Rasthaken 3. Das eingerastete Rohr 1 lagert formschlüssig auf dem Innenabschnitt 52 der Stützrippe 5 auf und wird ebenfalls formschlüssig von der Innenseite 32 des Rasthaken 3 eingefaßt. So wird das Rohr 1 über seinen gesamten Umfang formschlüssig eingefaßt.

In dem Ausführungsbeispiel sind Rasthaken 3 und Stützrippe 5 direkt an das Basiselement 2 angeformt.

Das vorbeschriebene Ausführungsbeispiel kann unter anderem verwendet werden, um ein komplex gebogenes Rohrteil in einer Tauwasserauffangschale eines Kühl- oder Gefriergeräts zu befestigen.

Die vorbeschriebene Erfindung erreicht eine Reihe von Vorteilen. Der erfindungsgemäße Schnappmechanismus erlaubt eine einfache Befestigung von Rohren, Drähten, Kabeln und Profilstäben. Durch formschlüssige Ausgestaltung kann erreicht werden, daß die Halterung kein Spiel hat, so daß die befestigten Gegenstände nicht wackeln. Der erfindungsgemäße Schnappmechanismus kann direkt in Basiselemente aus Kunststoff integriert werden, so daß die zu befestigenden Gegenstände ohne weitere Zusatzteile mit mechanisch hoher Haltekraft und niedriger Montagekraft befestigt werden können. Damit stellt der erfindungsgemäße Schnappmechanismus eine besonders kostengünstige Befestigungsform dar. Dadurch, daß die Öffnung des Rasthakens durch eine Kombination von Biegung und Torsion erreicht wird, ist die notwendige Verformung geringer, so daß der Rasthaken massiver und stärker ausgestaltet werden kann.

## Patentansprüche

1. Schnappmechanismus zur Halterung eines länglichen Gegenstandes (1) an einem Basiselement (2), wobei der Schnappmechanismus mindestens einen elastisch auslenkbaren Rasthaken (3) umfaßt,
**dadurch gekennzeichnet, dass** der Rasthaken (3) schräg zur Längsrichtung des eingerasteten länglichen Gegenstandes (1) ausgerichtet ist.

2. Schnappmechanismus nach Anspruch 1, **dadurch gekennzeichnet, daß** die elastische Auslenkung des Rasthakens (3) im wesentlichen eine Schwenkung um eine zur Einführrichtung des länglichen Gegenstandes (1) im wesentlichen parallele Achse (R) darstellt.

3. Schnappmechanismus nach einem der vorangehenden Ansprüche, **dadurch gekennzeichnet, daß** der Rasthaken (3) aus einem elastischen Material, vorzugsweise Kunststoff, hergestellt ist.

4. Schnappmechanismus nach einem der vorangehenden Ansprüche, **dadurch gekennzeichnet, daß** der Rasthaken (3) an das Basiselement (2) angeformt ist.

5. Schnappmechanismus nach einem der vorangehenden Ansprüche, **dadurch gekennzeichnet, daß** der Rasthaken (3) eine Außenseite (31) aufweist, mit der der längliche Gegenstand (1) beim Einführen in Kontakt kommt, wobei an der Außenseite (31) des Rasthakens (3) eine Einführschräge (4) gebildet ist.

6. Schnappmechanismus nach einem der vorangehenden Ansprüche, **dadurch gekennzeichnet, daß** an der Außenseite (31) des Rasthakens (3) eine Gleitfläche gebildet ist.

7. Schnappmechanismus nach einem der vorangehenden Ansprüche, **dadurch gekennzeichnet, daß** der Rasthaken (3) eine Innenseite (32) aufweist, mit der der längliche Gegenstand (1) nach dem Einrasten in Kontakt steht, wobei die Innenseite (32) des Rasthakens (3) den eingerasteten länglichen Gegenstand (1) formschlüssig einfaßt.

8. Schnappmechanismus nach einem der vorangehenden Ansprüche, **dadurch gekennzeichnet, daß** eine Stützrippe (5) vorgesehen ist, wobei die Stützrippe (5) einen Außenabschnitt (51) aufweist, mit dem der längliche Gegenstand (1) beim Einführen in Kontakt kommt.

9. Schnappmechanismus nach Anspruch 8, **dadurch gekennzeichnet, daß** die Stützrippe (5) einen Innenabschnitt (52) aufweist, mit dem der längliche Gegenstand (1) nach dem Einrasten in Kontakt steht.

10. Schnappmechanismus nach Anspruch 8 oder 9, **dadurch gekennzeichnet, daß** die Stützrippe (5) bezogen auf die Längsrichtung des länglichen Gegenstandes (1) gegenüber dem Rasthaken (3) versetzt positioniert ist.

11. Schnappmechanismus nach einem der Ansprüche 8 bis 10, **dadurch gekennzeichnet, daß** die Stützrippe (5) aus einem elastischen Material, vorzugsweise Kunststoff, hergestellt ist.

12. Schnappmechanimus nach einem der Ansprüche 8 bis 11, **dadurch gekennzeichnet, daß** die Stützrippe (5) an das Basiselement (2) angeformt ist.

13. Schnappmechanismus nach einem der Ansprüche 8 bis 12, **dadurch gekennzeichnet, daß** im Außenabschnitt (51) der Stützrippe (5) eine Einführschräge (6) gebildet ist.

14. Schnappmechanismus nach einem der Ansprüche 8 bis 13, **dadurch gekennzeichnet, daß** am Außenabschnitt (51) der Stützrippe (5) eine Gleitfläche ausgebildet ist.

15. Schnappmechanismus nach einem der Ansprüche 8 bis 14, **dadurch gekennzeichnet, daß** der eingerastete längliche Gegenstand (1) im Innenabschnitt (52) der Stützrippe (5) formschlüssig auf der Stützrippe (5) auflagert.

16. Schnappmechanismus nach einem der vorangehenden Ansprüche, **dadurch gekennzeichnet, daß** das Basiselement (2) und der Rasthaken (3) und/oder die Stützrippe (5) aus einem Kunststoffspritzteil hergestellt sind.
